# EUROPEAN PATENT APPLICATION

(11) **EP 0 524 752 A1**
(43) Date of publication of application: **27.01.1993**
(21) Application number: 92306357.2
(22) Date of filing: 10.07.1992
(51) Int. Cl.: G01T 1/185, G01T 1/29

(54) **Method and apparatus suitable for monitoring radiation**

(30) Priority: 13.07.1991 GB 9115132
(71) Applicant: GAMMEX-RMI LIMITED, Nottingham NG1 4FQ (GB)
(72) Inventor: Spanswick, Keith Albert, Nottingham NG7 1BQ (GB)
(74) Representative: Gilding, Martin John

(57) **Abstract**

A radiation beam (22) from a source (10) is monitored by positioning an ionisation chamber (16) sufficiently large to extend across the whole field of the beam (22) in the beam and moving a radiation absorbing material (e.g. a collimator jaw (14)) positioned between source (10) and chamber (16) to obstruct part of the beam (22). Correlation of the radiation intensity with the position of the jaw (14) provides a monitoring of the radiation delivered. A suitable ionisation chamber comprises a cylindrical first electrode (100) and a substantially linear second electrode (104) coaxially disposed with respect to the first. The operative part of the chamber is sufficiently long to extend across the whole field of the radiation beam. A water equivalent material (20) may be interposed in the beam to simulate actual treatment conditions. In an alternative a relatively small mass (24) may be traversed over the whole field to determine the radiation distribution in the beam (22) and for other purposes.

## Description

This invention relates to a method of and apparatus suitable for use in monitoring radiation and is especially concerned with monitoring X-ray radiation, for example in medical use.

If measurement of radiation at a particular point in a radiation beam is required, a small local measurement using a detector of a sufficiently small physical size is commonly made. In order to obtain information on distribution of radiation along a line or in a plane, one of two methods is commonly used. Either a single detector can be traversed over the whole plane progressively and its output correlated with the position of the detector, or a number of detectors can be positioned at fixed locations within the radiation beam, the outputs from each detector being correlated to give the field distribution indication. The former technique is relatively time consuming and involves potential difficulties when using a moving detector. The latter requires a number of relatively expensive detectors and associated electronics and therefore is very expensive. In both cases resolution problems may be encountered and measurement times can be excessive.

In the use of radiation for medical purposes, e.g. the use of medical linear accelerators for cancer treatment, the apparatus used is increasingly becoming computer controlled. When directing a beam of radiation at a tumour in a cancer patient it is important that the beam should be sufficiently uniform. As the patient's body generally has curved surfaces there is often a larger air gap at one side of the beam than the other: absorption and scattering in different ratios of tissue and air means that the beam of radiation reaching the tumour is non-uniform unless some compensating measures are adopted. One system which is used is to position a wedge of radiation absorbing material (selected to provide the best match to the contour of the patient's body) in the radiation beam, to deal with the air gap.

It has recently been proposed to compensate for this problem by utilising a collimator for the radiation in which at least one of the collimator jaws can be moved across the radiation beam. A similar effect to the interposition of a wedge of absorbing material is gained by progressively moving one of the collimator jaws across the radiation beam to gradually block the radiation reaching the patient. By appropriately controlling the movement of the jaw it is possible to compensate for different tissue thickness to the extent that the dose reaching the tumour is uniform across the whole of the beam. This moving jaw system is potentially able to provide a more accurate compensation than is possible when using wedges because the movement of the collimator jaw can be controlled to adapt accurately to the contour of the patient to be treated. It is also possible in this way to correct for imperfections in the radiation beams. However in order to determine that the desired effect is being achieved it is important that radiation intensity levels in the beam can be readily measured thus to check the radiation dose distribution readily in hospital.

One of the object of the present invention is to provide an improved method of monitoring radiation delivered by a radiation source.

Another object of the present invention is to provide improved apparatus for monitoring radiation delivered by a radiation source.

In one aspect the invention may be considered to provide a method of monitoring radiation delivered by a radiation source comprising directing a beam of radiation towards detecting means which is sufficiently large to extend across the whole field of the radiation beam, moving a radiation absorbing material between the source and detecting means whereby to prevent some of the radiation reaching the detecting means, and correlating the position of the radiation absorbing material with the intensity of radiation delivered whereby to monitor the radiation delivered.

Preferably, in a method in accordance with the invention, the detecting means is an ionisation chamber which extends across the whole field of the radiation beam. One suitable ionisation chamber comprises a pair of parallel spaced plates, as described in greater detail below and such a detector must intercept the whole area of the beam. However, a preferred ionisation chamber is a linear chamber in accordance with the invention as described below: such a linear chamber is less cumbersome and less expensive than the parallel plate chamber above and must be of sufficient length to extend completely across the whole field of the radiation beam from one side to the other (at the position where a measurement is taken).

In one method in accordance with the invention, especially a method suitable for use in calibrating the radiation supplied by a radiation beam for hospital treatment, the radiation absorbing material is provided by a jaw of a collimator for the radiation. Conveniently, in such a method a mass of a suitable water equivalent material is positioned between the radiation source and the detecting means to simulate treatment conditions. In a preferred method the jaws are moved between a fully closed position where substantially no radiation from the beam is permitted to pass the jaws and a fully open condition where the maximum radiation passes the jaws or vice versa, the movement being at a controlled rate to provide a beam radiation intensity of a desired distribution. In this preferred method an electronic processor, for example a suitably programmed microprocessor, is supplied with a signal from the jaw moving means, indicating the collimator jaw position, a signal from the detecting means indicating radiation intensity and a time signal. The processor can then provide an output signal indicating the rate of change of radiation intensity and/or total radiation received. In this way it is readily possible to monitor the dose of radiation which will be received by a patient.

In another method in accordance with the invention the radiation absorbing material comprises a mass of such material of dimension to intercept only a relatively small part of the radiation beam: in carrying out this method the mass is moved to progressively traverse over the whole cross-sectional area of the radiation beam and signals are provided indicating the position of the mass and radiation intensity detected at each position. The signals are processed, for example by a suitable microprocessor, to provide an indication of the distribution of radiation intensity within the beam. Alternatively, the position of the mass and the radiation intensity directed at that position may be recorded by any means and the recorded information processed to provide similar information.

In another aspect the invention may be considered to provide a method of obtaining an image of an object comprising directing a beam of radiation towards detecting means which is a sufficiently large to extend across the whole field of the radiation beam, positioning a mass of radiation absorbing material of dimension to intercept only a relatively small part of the radiation beam to prevent the intercepted radiation reaching the detecting means, and moving the mass to progressively traverse the absorbing material over the whole cross-sectional area of the beam intercepted by the object and preventing the radiation intercepted by the mass reaching the detecting means, thereby providing signals indicating the position of the mass and the radiation intensity detected at each position of the mass and processing the signals whereby to provide an image of the object.

In yet another aspect the invention may be considered to provide a method of obtaining an image of an object comprising directing a beam of radiation towards detecting means which is sufficiently large to extend across the whole field of the radiation beam, positioning the object within the radiation beam, positioning a mass of a radiation absorbing material of dimension to intercept only a relatively small part of the radiation beam to prevent the radiation intercepted by the mass reaching the detecting means, and moving the mass to progressively traverse the absorbing material over the whole cross-sectional area of the beam intercepted by the object and preventing the radiation intercepted by the mass reaching the detecting means, recording the position of the mass and the radiation intensity detected at each position and processing the recorded information to provide an image of the object.

Conveniently in carrying out a method as set out in either one of the last two preceding paragraphs the mass may be positioned either between the object and the radiation source or between the object and the detecting means.

In yet another aspect the invention may be considered to provide apparatus suitable for use in monitoring radiation in a radiation beam delivered by a radiation source, comprising detecting means which is sufficiently large to extend across the whole field of the radiation beam and adapted to be mounted to intercept the beam, a mass of radiation absorbing material, means adapted to mount the mass between a radiation source and the detecting means whereby to prevent the radiation intercepted by the mass reaching the detecting means, means for moving the mass to different positions in the radiation beam, and means for providing signals indicating the position of the mass and the corresponding radiation intensity detected by the detecting means.

In a preferred apparatus in accordance with the invention the detecting means comprises an ionisation chamber.

Preferably apparatus in accordance with the invention further comprises signal processing means, for example a suitably programmed microcomputer, for processing the signals and providing an output indicating the radiation distribution detected.

Suitably the moving means of apparatus in accordance with the invention is arranged to move the mass rectilinearly. Conveniently the mounting means comprises an X-Y table and the moving means comprises drive means for the X-Y table.

In another aspect the invention may be considered to provide radiation detecting means comprising an ionisation chamber including a cylindrical first electrode, a substantially linear second electrode coaxial with the first electrode, and means adapted to permit connection of an electrical supply whereby to establish a potential difference between the electrodes.

Preferably the second electrode is a conductive wire. Suitably the detecting means comprises means for tensioning the wire. Preferably the detecting means also comprises means for detecting changes in current flowing between the electrodes and recording the changes, conveniently at preselected intervals of time.

There now follows a detailed description, to be read with reference to the accompanying drawings of apparatus and methods embodying the invention. It will be realised that these have been selected for description to illustrate the invention by way of example.

In the accompanying drawings:-
Figure 1(a) is a diagrammatic view showing apparatus embodying the invention in use in carrying out a first method in accordance with the invention;
Figure 1(b) is a graph indicating results obtained in carrying out the first illustrative method;
Figure 2(a) is a diagrammatic plan view showing part of apparatus embodying the invention including a shielding block;
Figure 2(b) is a representation of the radiation distribution in the radiation beam as detected in carrying out a second illustrative method;
Figure 3(a) is a diagrammatic view showing apparatus in accordance with the invention in use in carrying out a third method embodying the invention; and
Figure 3(b) is a graph indicating the results obtained in carrying out the third illustrative method.
Figure 4 is a view in section showing a radiation dose probe embodying the invention;

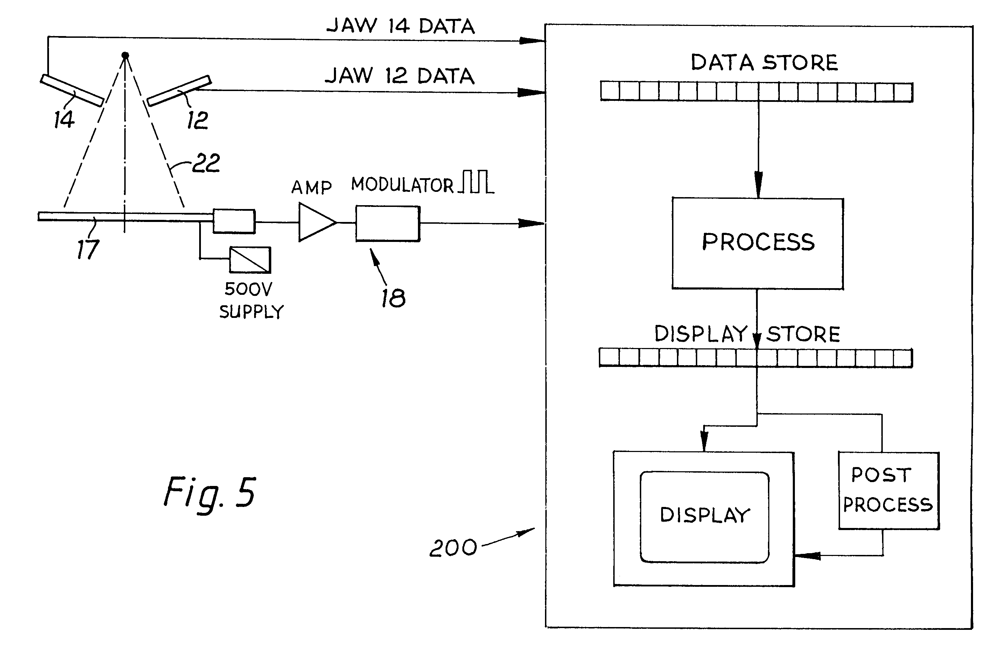

Figure 5 is a diagrammatic view indicating signal processing; and
Figure 6 is a flow chart indicating organisation of the apparatus.

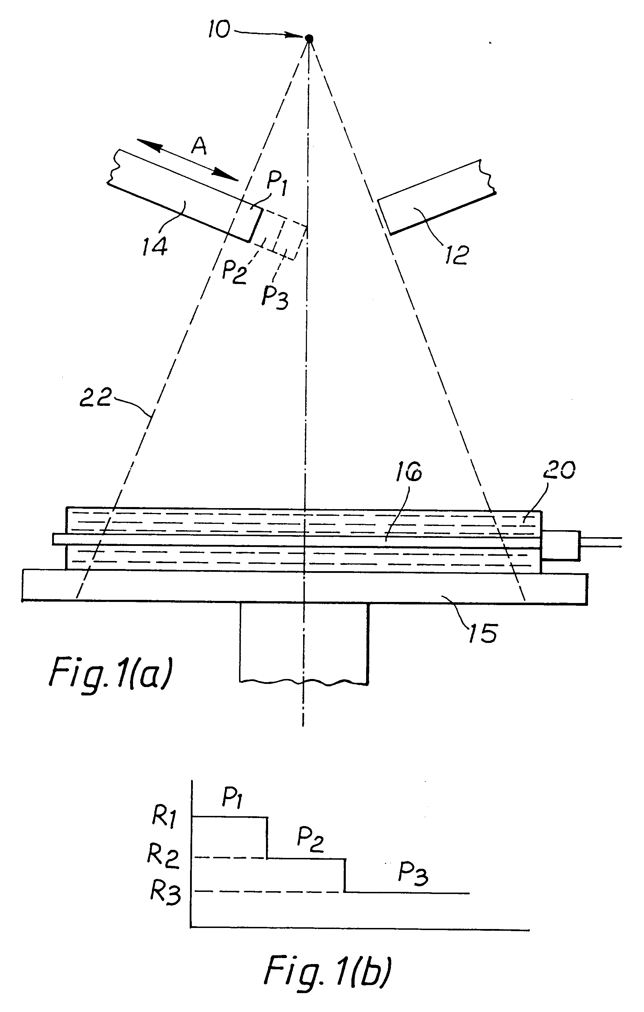

Referring now to Figure 1(a) the illustrative apparatus comprises a suitable radiation source (10), for example an X-ray generator and associated collimator jaws (12, 14). The collimator jaw (12) in the illustrative apparatus is fixed whilst the jaw (14) may be moved rectilinearly to and fro in the direction indicated by the arrow A. The illustrative apparatus further comprises a full field ionisation chamber (16), together with the necessary controlling and signal generating equipment represented at (18). The signal generating equipment suitably comprises an amplifier connected to a pulse generation circuit which produces pulses at the chamber site indicating the radiation dose detected, and preferably comprises a suitably programmed microprocessor or computer system (200).

Jaw position data is also fed to the computer (200), suitably from the associated jaw movement control system.

Signal integration time can thus be computer generated facilitating adaptation to a wide range of measurement (jaw velocities). Low level drift effects can be eliminated by setting the measurement threshold above combined noise and instantaneous drift signal levels.

The computer (200) is programmed to operate to collect data and process and display it as required. Suitably the apparatus is arranged to commence data collection when radiation greater than a predetermined threshold is sensed. The computer is suitably arranged to store the radiation level detected for each measurement increment, that is at each position of radiation absorbing material where a measurement is made.

Where the radiation absorbing material is the collimator jaws (12, 14) these measurements may be made at each 0.1 mm movement of the jaw (at 100 cm from the detecting means (16). The time when data is collected at each incremental jaw position is also stored.

A number of algorithms are available for call-up to transfer subsets of the collected data to a display memory, from which screen display or plotting could be arranged. Further processing of data can allow overlay of measurement of parameters including wedge angle (where the radiation delivered is being processed to simulate the presence of a wedge of absorbent material in the beam 22), flatness, symmetry and field size.

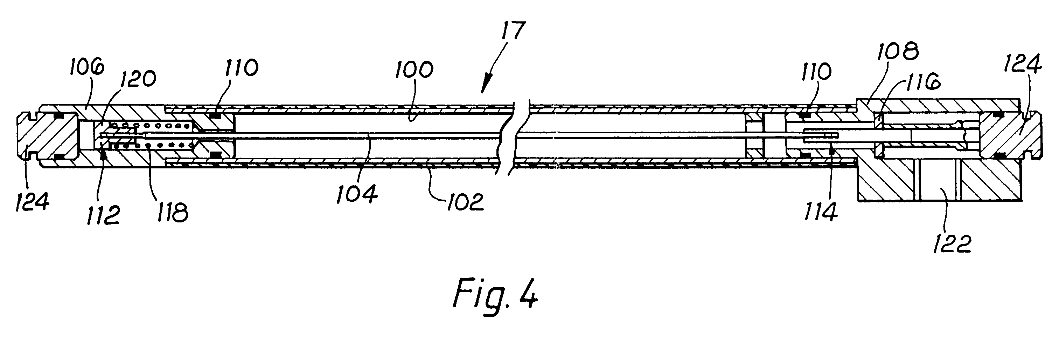

The full field ionisation chamber (16) used is preferably a linear ionisation chamber (17) in accordance with the invention (see Figure 4): it is important that the operative length of the chamber 17 extends across the whole field of the radiation beam (see Figure 1(a)). It is important that this chamber (16) is correctly positioned in the beam (22).

The chamber (17) comprises an electrically conductive, rigid, straight, metal tube (100) of circular cross-section. The tube (100) is, in a preferred embodiment, of an aluminium alloy with an opening 1 cm in diameter with 1 mm wall thickness; suitably a tube length of 40 cm will be sufficient to provide a chamber with operative length sufficient to extend across the whole field of the radiation beam. The tube (100) has an outer cover layer (102) of electrically insulating material, e.g. a suitable plastics material of sufficient thickness to provide reliable electrical insulation without significantly attenuating the radiation to be detected.

Whereas the preferred chamber 17 has a covered metal tube body portion, other body portions may be used, for example a glass tube with a conductive carbon coating on its inner surface.

An electrically conductive wire (104) under tension extends along a central axis of the tube (100); suitably the wire is of a metal alloy about 1 mm diameter. For reliable results it is important that the wire (104) be straight and extend along the central axis of the tube 100.

The wire (104) is supported by mounting means comprising insulated housings (106, 108) (suitably of a insulating plastics material, e.g. polytetrafluoroethylene) having end portions slidingly received in opposite ends of the tube (100) and sealed in place by suitable seals, e.g. O-rings (110). The housing (106) supports clamp means (112) by which one end portion of the wire (104) is secured and the housing (108) supports clamp means (114) by which the opposite end portion of the wire (104) is secured. The clamp means (114) has a screw threaded outer surface on which is threaded a nut (116) arranged to bear on a shoulder in the housing (108). The clamp means (112) is urged away from the clamp means (114) by a helical spring (118) acting between a shoulder in the housing (106) and a head (120) of the clamp means (112). A suitable length of wire (104) can then be tensioned by rotation of the nut (116), against the spring (118), until the wire (104) is straight. The clamp means (112, 114) and housing (106, 108) are so constructed and arranged as to ensure that the tensioned wire (104) is coaxial with the tube (100). Provided that the wire (104) is properly tensioned in initial assembly the system allows thermal expansion or contraction of the chamber (17) without affecting the position or straightness of the wire (104).

Access (122) is provided in the housing (108) for introduction of electrical connections to the wire (104) and the tube (100), the access (122) sealing against transmission of air or water through the access (122).

Openings at end portions of the housing (106, 108) are sealed by removable closures, e.g. bungs (124) which can be removed to give access to the interior of the chamber (17), e.g. for tensioning the wire (104).

The entire assembly is preferably screened against interference, e.g. by an external coating of dag.

The chamber (17) is filled with air at atmospheric pressure although, if desired, it could be filled with other ionisable gases or liquids for some purposes. As the chamber (17) is entirely sealed against ingress of water to the interior of the tube (100), the chamber (17) can be immersed in water at various depths or some measurements, if desired. Alternatively it can be inserted in a borehole in a block of water equivalent material, as shown in Figure 1(a).

The tube (100) forms an outer electrode and the wire (104) an inner electrode.

In use a high DC voltage, e.g. 500 V, is applied between the tube (100) and wire (104) (which provides the current collection electrode). The current output of the chamber (17) is proportional to the radiation dose per unit area and the chamber length exposed to radiation.

Alternatively the ionisation chamber (16) may be a chamber, of previously known type, which is so dimensioned as to intercept the whole area of the radiation beam. Such a known chamber comprises a pair of parallel plates each having a conductive inner surface (for example provided by a layer of aluminium a few microns thick) with an insulating spacer around the edges of the metal plates spacing them apart by a preselected distance. In use an electrical potential is applied across the plates: in normal circumstances no current passes. When radiation passes through the chamber, for example X-ray radiation of the type used in the treatment of hospital patients, the air within the chamber is ionised and a small current flow between the parallel plates occurs. This can be measured and provides a measure of the intensity of the radiation which is passing through the ionisation chamber. The actual output is proportional to the point intensity of the radiation multiplied by the area of the total radiation field.

Other radiation detecting means may be used, for example a film or other photo-reactive material: the effect of the radiation passing through film can be assessed using a densitometer. However, such a method has a relatively small dynamic range and is very labour intensive (and thus expensive); furthermore, great care must be taken to ensure that the film is in accurate register with the radiation beam/source.

In the illustrative apparatus the moving collimator jaw (14) may be moved by any suitable means, for example a lead screw mechanism operated by a stepper motor. Associated with the moving means is a signal generator arranged to provide a signal indicating the position of the moving collimator jaw for the microprocessor.

In using the illustrative apparatus to carry out the methods described below to monitor the radiation, where the full radiation field is detected by the ionisation chamber (17), the signal is representative of the full radiation dose. If a succeeding measurement of radiation is made with a mass of radiation absorbing material interposed in the beam, the difference between the two signals given by the ionisation chamber is equal to the contribution of the shielded area, the exact location of which can be indicated by the position or feedback signal referred to.

In using the illustrative apparatus in carrying out the first illustrative method a mass of a suitable water equivalent material (20) is positioned in a radiation beam (22) from the source (10), with an ionisation chamber (16) appropriately positioned, e.g. with the ionisation chamber (17) received in an appropriately positioned borehole in the water equivalent material. Suitable water equivalent materials are available commercially. The thickness of water equivalent material (20) is selected to be such as to simulate a patient's body and the depth of the region to be treated by radiation. In carrying out the illustrative method of monitoring radiation delivered by the radiation source (10) the beam of radiation (22) is directed towards the ionisation chamber (16) with the water equivalent material (20) interposed between the source and the ionisation chamber.

When the movable jaw (14) is in its closed condition (that is contacting the fixed jaw (12)) the radiation beam (22) is wholly prevented from reaching the ionisation chamber (16). The movable jaw (14) can be moved in the direction of the arrow A at a controlled rate to produce a desired radiation distribution. In use the rate of movement of the movable jaw (14) would be controlled in correspondence with the contour of a particular patient to be treated to achieve a desired radiation dose at the site to be treated. By sweeping the jaws (12, 14) over the field of the beam (22) and monitoring the jaw position, a suitable computer program is able to construct a graph of radiation output against position in the radiation field. Further analysis of this profile makes it possible to access the flatness, symmetry and location in space of the field. The system has a resolution and precision only limited by the jaw position indicating instrumentation and, because it makes a realtime measurement is ideally suited to testing the wedge generating jaw movement systems found on the latest Medical Linear Accelerators. In Figure 1(a) the movable jaw (14) is shown part way across its path of travel with its end portion at a position P₁ spaced from the fixed jaw 12. The position of the same end portion of the jaw (14) indicated in dash line in Figure 1(a) is shown in positions P₂ and P₃ in each case closer to the fixed jaw 12. In Figure 1(b) the output given by the ionisation chamber (16) is indicated as R₁ where the movable jaw (14) is in position P₁ as R₂ when the jaw is at the position P₂ and R₃ in position P₃. As can be seen viewing Figure 1(a) as the jaw position is changed a change in radiation dose occurs.

In carrying out the first illustrative method using the moving collimator jaw (14) a position resolution of plus or minus half a millimetre can be achieved enabling accurate monitoring of the radiation dose applied. Suitable radiation absorbing materials are tungsten or depleted uranium: the collimator jaws (12, 14) may typically be of tungsten about 10 cm in thickness.

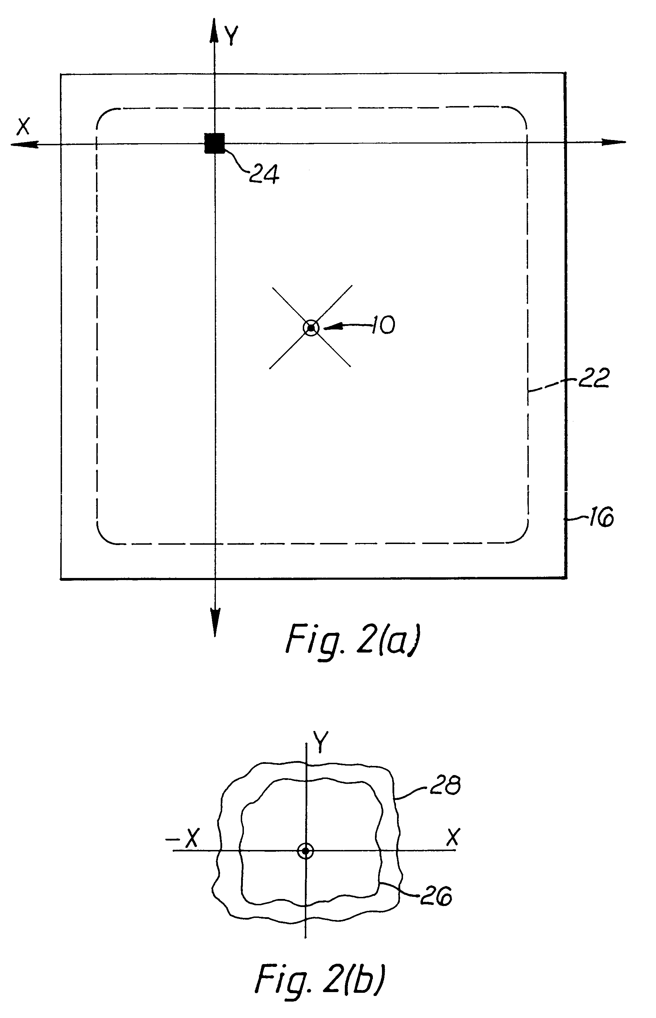

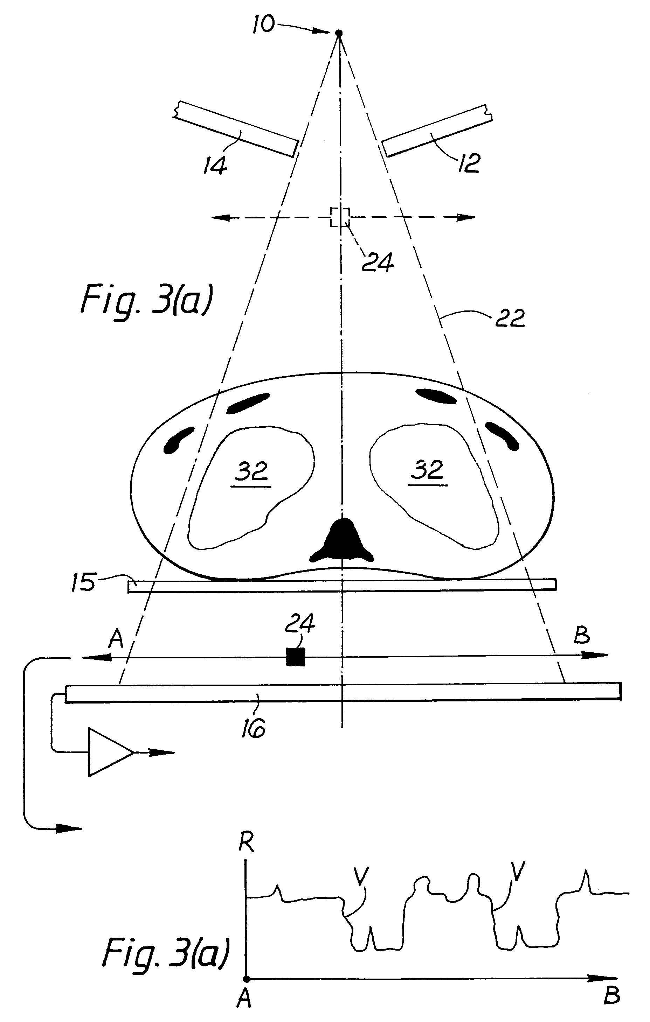

In carrying out the second illustrative method, a shielding block (24) provided by a suitably sized mass of radiation absorbing material of dimensions sufficient to intercept only a relatively small part of the radiation beam (22) is positioned between the radiation source (10) and the ionisation chamber (16) (as shown in Figures 2(a) and 3(a)). The shielding block (24) is mounted for rectilinear movement in mutually perpendicular directions X, Y (see Figure 2(a)). Suitably the shielding block (24) is mounted on a so-called X-Y table in order to effect the required movements. X-Y tables are well known to those skilled in the art and comprise a mechanism for moving a mounting means (by which the shielded block (24) will be mounted) in the X and Y directions, for example using appropriately positioned lead screws and stepper motors which are preferably controlled by the microprocessor referred to above.

In carrying out the second illustrative method, the shielded block (24) is progressively traversed over the whole cross-sectional area of the radiation beam (22) and signals indicating the position of the block (24) and the radiation detected are correlated by the microprocessor to provide an indication of the radiation intensity within the beam. Figure 2(b) is a plot showing the boundary of the region within which 70% of the maximum radiation is obtained and a plot within the boundary of which 80% of the maximum radiation intensity is contained, indicated respectively by references (26, 28). This provides a quick and simple method of determining the distribution of radiation within the beam (22).

The apparatus including the shielded block (24) shown in Figure 3(a) can suitably be used when treating a patient with radiation, e.g. X-ray radiation to also produce an image of the patient's anatomy in carrying out the third illustrative method. Assuming the radiation field is uniform and constant, the change in chamber signal as the shielded block (24) is scanned over the radiation field (22) will be related to differential absorbtion in the patient's anatomy which can be displayed in the form of a grey scale image. Typical results from such an imaging technique are shown by Figure 3(b) in which a graph of radiation detected by the chamber (16) is plotted against the position of the shielding block (24) as it is moved linearly from A to B across the field (22). The valleys V in the plot indicate the patient's lungs in which the radiation is attenuated by the substantial air content.

An alternative position for the shielding block (24) and X-Y table is shown in dash line on Figure 3(a). For accuracy, when positioned in the alternative position the shielding block (24) must be smaller than when positioned in the full line position and the X-Y table requires somewhat greater precision. However, it is considerably smaller and may therefore be somewhat simpler to fabricate and less expensive than the larger X-Y table required in the full line position. Furthermore, traversing of the shielding block (24) over the whole radiation field can be accomplished more quickly in the alternative position as the distances moved are shorter; this increases the speed with which a satisfactory image can be obtained. However, as the treatment period in radiotherapy is typically several minutes, it will normally be possible to obtain a satisfactory image with the block in either position; use of the alternative position, however, requires that the patient lie still for a shorter period of time necessary to obtain the image.

The illustrative apparatus uses only a single full field ionisation chamber to detect the radiation, with its associated amplifier and electronics. This can be in a fixed position where the ionisation chamber is sufficiently large to intercept the whole area of the beam, in which case connection and mounting of the detecting means is simplified by comparison with moving detecting means. Even when using the probe (17) described above, movement and mounting of the probe is considerably simplified by comparison with use of a single small movable detector referred to above. In comparison with the arrays of small fixed detectors referred to above, the cost is considerably less as each fixed detector requires the same electronic control and amplifier equipment; thus with an array of detectors, the expense is considerable. One such known system has 128 detection diodes, each with its own amplifier, the system costing approximately £50,000. Because of the diode spacing the resolution is only about 3 mm. Furthermore, this only gives instantaneous radiation measurements. The cost of the illustrative apparatus necessary to carry out the illustrative methods is likely to be considerably less.

## Claims

1. A method of monitoring radiation delivered by a radiation source comprising directing a beam of radiation towards detecting means which is sufficiently large to extend across the whole field of the radiation beam, moving a radiation absorbing material between the source and detecting means whereby to prevent some of the radiation reaching the detecting means, and correlating the position of the radiation absorbing material with the intensity of radiation delivered whereby to monitor the radiation delivered.

2. A method according to Claim 1 wherein the detecting means is a ionisation chamber of a sufficiently large area to intercept the whole of the radiation beam.

3. A method according to Claim 1 wherein the detecting means is a linear ionisation chamber which is sufficiently long to extend across the whole radiation field.

4. A method according to any one of the preceding claims wherein the radiation absorbing material is provided by a jaw of a collimator for the radiation.

5. A method according to Claim 3 wherein a mass of water equivalent material is positioned between the radiation source and the detecting means to simulate treatment conditions.

6. A method according to either one of Claims 4 and 5 wherein the jaw is moved between a fully closed position where no radiation from the beam is permitted to pass the collimator jaws and a fully open condition where the maximum radiation passes the jaws or vice versa, the movement being at a controlled rate to provide a beam radiation intensity of controlled distribution, supplying to an electronic processor a signal indicating jaw position, a signal from the detecting means indicating radiation intensity and a time signal, and providing an output signal indicating rate of change of radiation intensity and/or total radiation received.

7. A method according to Claim 1 wherein the radiation absorbing material comprises a mass of dimensions to intercept only a relatively small part of the radiation beam, comprising moving the mass to progressively traverse the mass over the cross-sectional area of the radiation beam providing a signal indicating the position of the mass and a signal indicating the radiation intensity detected at each position and processing the signals whereby to provide an indication of the distribution of radiation intensity within the beam.

8. A method of obtaining an image of an object comprising directing a beam of radiation towards detecting means which is sufficiently large to extend across the whole field of the radiation beam, positioning the object within the radiation beam, positioning a mass of a radiation absorbing material of dimension to intercept only a relatively small part of the radiation beam to prevent the intercepted radiation reaching the detecting means, and moving the mass to progressively traverse the absorbing material over the whole cross-sectional area of the beam intercepted by the object and preventing the radiation intercepted by the mass reaching the detecting means, thereby providing signals indicating the position of the mass and the radiation intensity detected at each position of the mass and processing the signals whereby to provide an image of the object.

9. A method according to Claim 1 wherein the radiation absorbing material comprises a mass of dimensions to intercept only a relatively small part of the radiation beam, comprising moving the mass to progressively traverse the mass over the cross-sectional area of the radiation beam, recording the position of the mass and the radiation intensity directed at that position and processing the recorded information whereby to provide an indication of the distribution of the radiation intensity within the beams.

10. A method of obtaining an image of an object comprising directing a beam of radiation towards detecting means which is sufficiently large to intercept the whole field of the radiation beam, positioning the object within the radiation beam, positioning a mass of a radiation absorbing material of dimension to intercept only a relatively small part of the radiation beam to prevent the radiation intercepted by the mass reaching the detecting means, and moving the mass to progressively traverse the absorbing material over the whole cross-sectional area of the beam intercepted by the object and preventing the radiation intercepted by the mass reaching the detecting means, recording the position of the mass and the radiation intensity detected at each position and processing the recorded information to provide an image of the object.

11. Apparatus suitable for use in monitoring radiation in a radiation beam delivered by a radiation source comprising detecting means which is sufficiently large to extend across the whole field of the radiation beam and adapted to be mounted to intercept the beam, a mass of radiation absorbing material, means adapted to mount the mass between a radiation source and the detecting means whereby to prevent the radiation intercepted by the mass reaching the detecting means, means for moving the mass to different positions in the radiation beam, and means for providing signals indicating the position of the mass and the corresponding radiation intensity detected by the detecting means.

12. Apparatus according to Claim 11 wherein the detecting means is an ionisation chamber.

13. Apparatus according to either one of Claims 11 and 12 comprising signal processing means for processing the signals and providing an output indicating the radiation distribution detected.

14. Apparatus according to any one of Claims 11 to 13 wherein the moving means is arranged to move the mass rectilinearly.

15. Apparatus according to any one of Claims 11 to 14 wherein the mounting means comprises an X-Y table and the moving means comprises drive means for the X-Y table.

16. Radiation detecting means comprising an ionisation chamber including a cylindrical first electrode, a substantially linear second electrode coaxial with the first electrode, and means adapted to permit connection of an electrical supply whereby to establish a potential difference between the electrodes.

17. Radiation detecting means according to Claim 16 wherein the second electrode is a conductive wire.

18. Radiation detecting means according to Claim 17 comprising means for tensioning the wire.

19. Radiation detecting means according to Claim 16 further comprising means for detecting changes in current flowing between the electrodes.
